# EUROPÄISCHE PATENTSCHRIFT

(11) **EP 0 860 611 B1**
(45) Veröffentlichungstag und Bekanntmachung des Hinweises auf die Patenterteilung: **14.08.2002**
(21) Anmeldenummer: 97120701.4
(22) Anmeldetag: 26.11.1997
(51) Int. Cl.: F04D 15/00, H02K 11/00, G01K 1/14

(54) **Pumpe mit Temperatur- und Drehzahlsensor**
Pump with temperature and speed sensor
Pompe avec capteurs de température et de vitesse

(30) Priorität: 19.02.1997 DE 19706424
(43) Veröffentlichungstag der Anmeldung: 26.08.1998
(73) Patentinhaber: WILO GmbH, D-44263 Dortmund (DE)
(72) Erfinder: Röhn, Anton, 44894 Bochum (DE); Hübner, Jürgen, 44287 Dortmund (DE); Benninghoff, Lutz, 47178 Duisburg (DE)
(74) Vertreter: COHAUSZ DAWIDOWICZ HANNIG & PARTNER

(56) Entgegenhaltungen:
- DE-A- 3 803 597
- DE-A- 19 505 543
- US-A- 4 318 073
- US-A- 5 582 508

## Beschreibung

Die Erfindung betrifft eine Pumpe mit einem Pumpenlaufrad und einem das Pumpenlaufrad antreibenden Antrieb, wobei zwischen dem Pumpenlaufrad und dem Antrieb eine Trennwand ist, und auf der dem Antrieb zugewandten Seite der Trennwand ein Drehzahlsensor im Bereich des Pumpenlaufrades angeordnet ist, und der Drehzahlsensor mittels einer elektrischen Leitung mit einer Steuerung der Pumpe in elektrischer Verbindung ist.

Bei drehzahlgesteuerten Pumpen ist es insbesondere bei Antrieben mit Asynchronmotoren üblich, Drehzahlsensoren in der Nähe des Pumpenlaufrades anzuordnen, um die tatsächliche Drehzahl der Pumpe zu ermitteln. Diese Drehzahlsensoren werden meist unmittelbar hinter der Trennwand auf der Fördermedium abgewandten Seite im Bereich des Pumpenlaufrades angeordnet. Da konstruktionsbedingt die Steuerung bzw. deren Elektronik auf der dem Pumpenlaufrad abgewandten Seite des Pumpengehäuses angeordnet ist, muß der Drehzahlsensor mit einer relativ langen Zuführleitung mit der Steuerung verbunden werden. Es ist zudem bekannt, Temperatursensoren an der Trennwand zu befestigen, um die Temperatur des Fördermediums im Bereich des Pumpenlaufrades zu ermitteln.

Nachteilig bei den bekannten Ausführungsformen ist, daß der Temperatursensor mittels zusätzlicher Befestigungsvorrichtungen an der Trennwand zwischen Antrieb und Fördermedium befestigt werden muß. Derartige mechanische Befestigungsvorrichtungen bestehen meist aus vielen Teilen, wodurch der Aufbau kompliziert und kostenaufwendig ist. Zudem ist es bekannt, die Temperatursensoren an der Trennwand anzukleben. Bedingt durch die wechselnden thermischen und mechanischen Belastungen kommt es jedoch zu einer schnellen Alterung der Klebeverbindung, wodurch die Funktionssicherheit der Pumpe herabgesetzt wird. Auch ist eine Demontage bei Verwendung einer Klebung nicht ohne weiteres möglich.

Aufgabe der vorliegenden Erfindung ist es daher, eine Vorrichtung zu schaffen, bei der der Temperatursensor unter Vermeidung von komplizierten Befestigungsvorrichtungen oder Klebeverbindungen sicher und dauerhaft an der Trennwand anliegt.

Diese Aufgabe wird erfindungsgemäß dadurch gelöst, daß zusätzlich zum Drehzahlsensor ein Temperatursensor an die Leitung angeschlossen ist, und der Temperatursensor mittels einer Feder gegen die Trennwand oder einer mit dieser in thermisch leitender Verbindung befindlichen Wärmebrücke druckbeaufschlagbar ist.

Der Gegenstand der Erfindung zeichnet sich vorteilhaft dadurch aus, daß der Temperatursensor stets, d. h. auch bei Vibrationen und Temperaturausdehnungen des Pumpengehäuses, sicher an der Trennwand anliegt. Auch kann die Pumpe leicht demontiert werden, da keine Schraub- oder Klebverbindungen gelöst werden müssen.

Der Temperatursensor kann dabei direkt an dieselbe Leitung, welches den Drehzahlsensor mit der Pumpensteuerung verbindet, angeschlossen werden. Er kann jedoch auch mittels einer zusätzlichen Leitung mit der Pumpensteuerung in elektrischer Verbindung sein. Die Verwendung nur einer gemeinsamen Leitung für den Drehzahl- und den Temperatursensor ist jedoch Kostengünstiger und daher vorzuziehen.

In einer besonderen Ausführungsform wird die Feder durch die Verbindungsleitung selbst gebildet. In einer einfachen und besonders bevorzugten Ausführungsform wird dabei die den Temperatursensor mit dem Drehzahlsensor bzw. der Pumpensteuerung verbindende Leitung zu einer Schlaufe oder einem Auge gebogen. Die Schlaufen- bzw. Augengröße ist dabei so bemessen, daß die Schlaufe bzw. das Auge im montierten Zustand zusammengedrückt ist. Durch die Rückstellkraft wird nun der Temperatursensor, der an dem Bereich der Leitung befestigt werden muß, der an der Trennwand nach dem Zusammendrücken anliegen würde, gegen diese gedrückt.

Weitere vorteilhafte Ausgestaltungen der Erfindung sind jeweils Gegenstand der weiteren Unteransprüche.

Die Erfindung sowie vorteilhafte Ausgestaltung der Erfindung gemäß Gegenständen der Unteransprüche werden im folgenden anhand in den Zeichnungen dargestellter Ausführungsbeispiele näher erläutert.

Es zeigen:
- Fig. 1: Eine Querschnittsdarstellung einer Kreiselpumpe mit einer Pumpensteuerung;
- Fig. 2: eine Ausschnittsvergrößerung des Bereichs A der Fig. 1;
- Fig. 3 und Fig. 3b: das Andrücken des Temperatursensors gegen die Trennwand mittels der zur Schlaufe bzw. Auge gebogenen Zuführungsleitung;
- Fig. 3c: das Andrücken des Temperatursensors gegen die Trennwand mittels einer Feder;
- Fig. 3d und Fig. 3e: das Andrücken des Temperatursensors gegen die Trennwand mittels einer als Blattfeder ausgebildeten Zuführungsleitung;
- Fig. 4, Fig. 4a und Fig. 4b: verschiedene Versionen der als Flachbandleitung ausgebildeten flexiblen Zuführungsleitung für den Drehzahlsensor und Temperatursensor;
- Fig. 5: eine schematische Darstellung der Befestigung des Drehzahlsensors sowie der Schlaufe mit dem Temperatursensor an der Wickelkopfkappe.

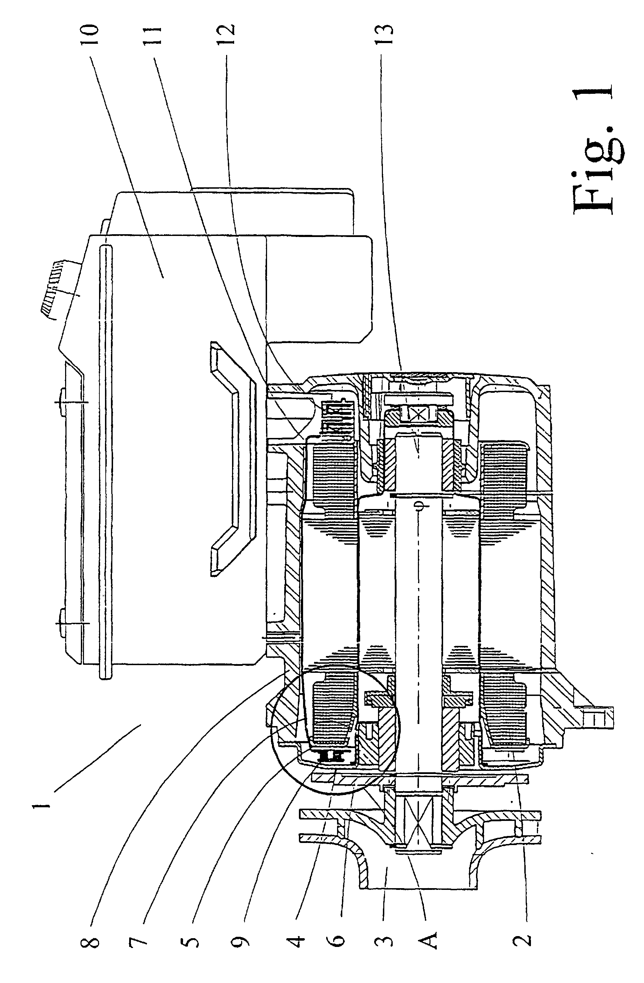

Die Fig. 1 zeigt eine Kreiselpumpe 1 mit einem Pumpengehäuse 8, an dem eine Pumpensteuerung 10 befestigt ist. Das Pumpenlaufrad 3 wird mittels des elektrischen Antriebs 2 über eine Antriebswelle 13 angetrieben. Der elektrische Antrieb 2 ist mittels einer Trennwand 4 vom Fördermedium 14 getrennt. An der der Trennwand 4 zugewandten Wickelkopfkappe 5 ist ein Drehzahlsensor 9 in Form einer Spule befestigt, der die Rotation des Pumpenlaufrades 3 mit Hilfe einer Induktionsplatte 6, welche mit dem Pumpenlaufrad 3 rotiert, detektiert. Der Drehzahlsensor 9 ist mittels einer Leitung 7, insbesondere einer Flachbandleitung über eine elektrische Steckverbindung mit der Pumpensteuerung 10 in elektrischer Verbindung.

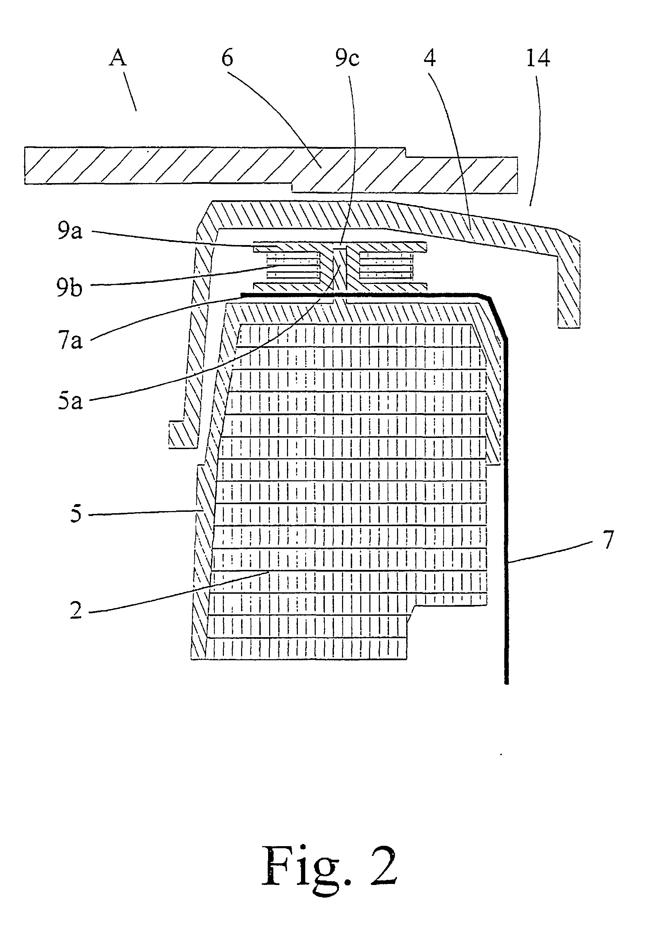

Die Figur 2 zeigt eine Ausschnittsvergrößerung des Ausschnitts A der Figur 1. Der Drehzahlsensor 9 besteht aus einem Spulenkörper 9a, der eine zentrierte Bohrung 9c aufweist. Der Spulenkörper 9a trägt die Spulenwicklungen 9b und ist auf der Flachbandleitung 7 im Bereich 7a befestigt. Die Verbindung der Adern bzw. Leitungen des Flachbandkabels 7 mit der Spulenwicklung 9b ist nicht dargestellt. Die Spule 9 kann mittels einer Klebeverbindung dauerhaft mit der Flachbandleitung 7 bzw. dessen Bereich 7h verbunden sein. Der Spulenkörper 9a wird auf einen Vorsprung bzw. Dorn der Wickelkopfkappe 5 lösbar aufgesteckt. Die Flachbandleitung 7 mit seinem Bereich 7a liegt dabei zwischen dem Spulenkörper 9a und der Wickelkopfkappe 5 fest ein. Die Trennwand 4 verhindert zusammen mit anderen nicht dargestellten Dichtungsteilen, daß das Fördermedium 14 in dem Bereich 16 zwischen Trennwand 4 und Wickelkopfkappe 5 eindringen kann.

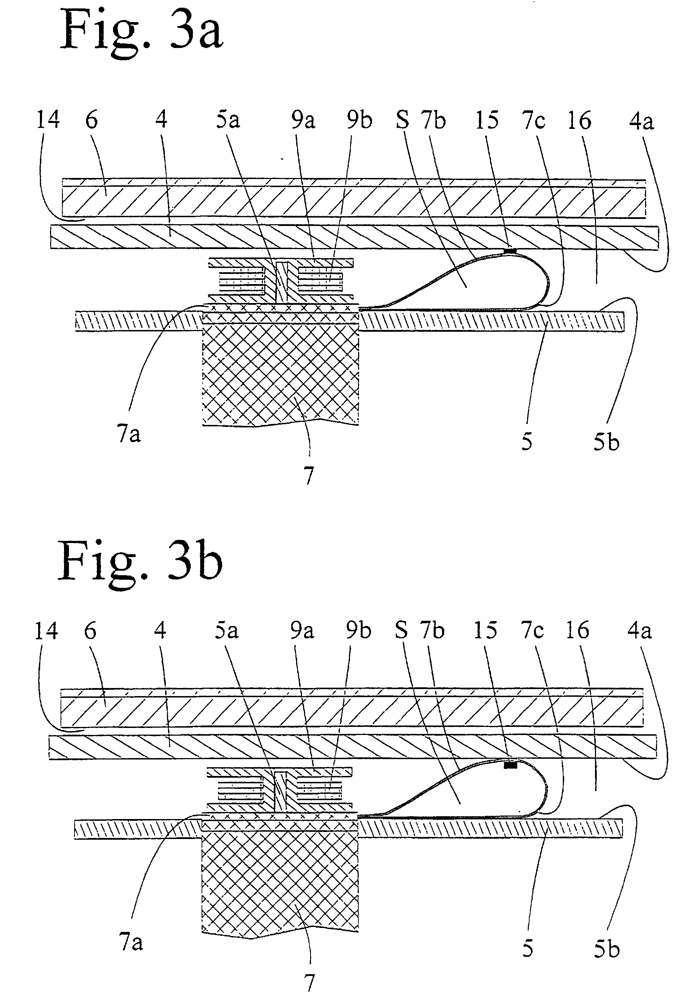

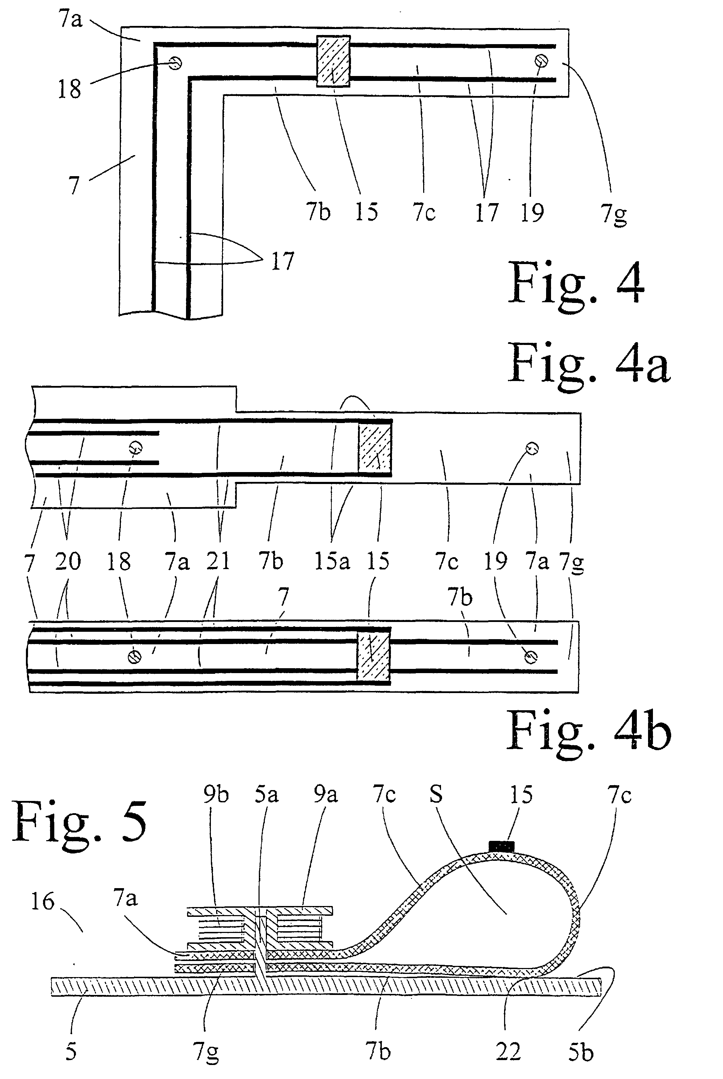

Die Figuren 3a und 3b zeigen eine seitliche Draufsicht auf die Wickelkopfkappe 5. Das zur Pumpensteuerung 10 führende Flachbandleitung 7 wird lediglich im Bereich der Wickelkopfkappe 5 dargestellt und ist am unteren Figurenrand abgeschnitten. Der Temperatursensor 15 ist an der Flachbandleitung 7b, 7c, welches wie in den Figuren 4, 4a und 4b eine Verlängerung der Flachbandleitung 7 sein kann, befestigt. Die Leitung 7b, 7c ist zu einer Schlaufe S gebogen.

Der Schlaufendurchmesser ist dabei so bemessen, daß er im unmontierten Zustand größer als der Abstand zwischen der Trennwand 4, 4a und der Wickelkopfkappe 5, 5b ist, so daß sie beim Montieren zusammengedrückt wird. Hierdurch entsteht eine Rückstellkraft, die den Temperatursensor 15 gegen die Trennwand 4, 4a druckbeaufschlagt. Durch die geringe Dicke der Flachbandleitung kann der Temperatursensor 15 entweder auf der Außenseite (Fig. 3a) oder auf der Innenseite (Fig. 3b) der Schlaufe S angeordnet werden.

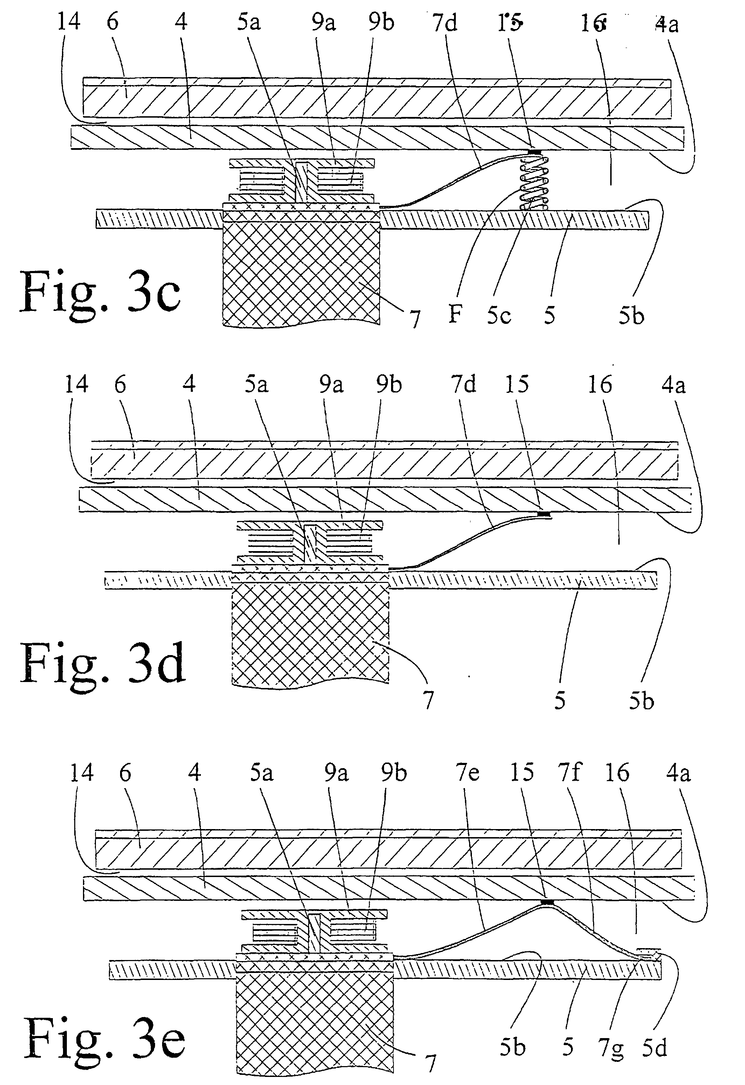

Die Figur 3c zeigt eine weitere Ausführungsform der Erfindung, wobei der Temperatursensor 15 am Ende einer Stichleitung 7d, welches ebenfalls mit der Flachbandleitung 7 in elektrischer Verbindung sein kann, befestigt. Das Stichleitung 7d wird mittels einer Feder F, die mittels des an der Wickelkopfkappe 5 angeformten Vorsprungs bzw. Dorns 5c gehalten ist, in Richtung der Trennwand 4 druckbeaufschlagt, wodurch der Temperatursensor 15 an der Seite 4a der Trennwand 4 anliegt.

Auf die Feder F kann dann verzichtet werden (Fig. 3d), wenn die Stichleitung 7d eine genügend große Steifigkeit aufweist und als Blattfeder dienen kann.

Wie in Figur 3e dargestellt, ist es auch möglich, den Temperatursensor 15 in der Mitte einer Stichleitung 7e, 7f zu befestigen, wobei diese Stichleitung 7e, 7f mit seinem einen Ende an die Flachbandleitung 7 angeschlossen ist und mit seinem anderen Ende 7g in einem L-förmigen Vorsprung 5d der Wickelkopfkappe 5 arretiert ist. Die Stichleitung 7e, 7f ist dabei so viel länger als der Abstand zwischen dem Drehzahlsensor und dem L-förmigen Vorsprung zu wählen, daß die Stichleitung 7e, 7f zusammengestaucht ist und sich dadurch auswölbt. Die Auswölbung muß im unmontierten Zustand der Pumpe so groß sein, daß der Temperatursensor 15 im montierten Zustand noch mit einer hinreichend großen Kraft gegen die Seite 4a der Trennwand 4 druckbeaufschlagt wird.

Die Figur 4 zeigt eine Flachbandleitung 7, welches L-förmig ausgebildet ist, wobei der Bereich 7 die Zuführungsleitung von der Steckverbindung 12 hin zum Bereich 7a, d. h. der Anschlußstelle für den Drehzahlsensor 9 darstellt. Die Flachbandleitung 7 hat zwei fensterartige Aussparungen bzw. Bohrungen 18, 19. Werden diese Bohrungen 18, 19 zur Deckung gebracht, so bilden die Leitungsbereiche 7b, 7c die Schlaufe S. Die Flachbandleitung 7,7a,7b,7c hat Leiterbahnen bzw. -adern 17, an denen der Drehzahlsensor 9 sowie der Temperatursensor 15 parallel anschließbar sind. Der Drehzahlsensor 9 ist in Figur 4 nicht dargestellt.

Die Figuren 4a und 4b zeigen weitere Ausführungsformen von der Flachbandleitung 7, 7b, 7c, wobei bei an der Flachbandleitung 4a der Drehzahlsensor an den Leiterbahnen 20 und der Temperatursensor 15 an den Leiterbahnen 21 der Flachbandleitung 7 anschließbar ist. Der Temperatursensor 15 ist in seinen Abmessungen so gehalten, daß seine Kontakte 15a einen Abstand voneinander haben, der ungefähr dem Abstand der Leiterbahnen 21 voneinander entspricht. Hierdurch ist es möglich, den Temperatursensor 15 ohne zusätzliche Verbindungsleitungen mit den Leiterbahnen 21 durch eine einfache Lötverbindung zu verbinden. Bei der in Figur 4a dargestellten Flachbandleitung ist der Drehzahlsensor im Bereich der Aussparung 18 an der Flachbandleitung 7 befestigt. Bei dem in Figur 4b dargestellten Kabel ist er dagegen im Bereich der Aussparung 19 befestigt. Die unterschiedliche Anordnung des Drehzahlsensors auf der Flachbandleitung 7 hat zur Folge, daß wie in Figur 5 dargestellt, entweder das Leitungsende 7g unmittelbar an der Seite 5b der Wickelkopfkappe 5 anliegt oder aber der Bereich 7a, von dem aus die Flachbandleitung 7 zur Pumpensteuerung 10 führt.

### Bezugszeichenliste:

- 1: Pumpe
- 2: Elektrische Antrieb; Ständerwicklung
- 3: Pumpenlaufrad
- 4: Trennwand
- 5: Wickelkopfkappe
- 5a: Vorsprung bzw. Dorn zur Halterung des Drehzahlsensors 9
- 5b: Der Trennwand zugewandte Seite der Wickelkopfkappe
- 5c: Federhalterung, insbesondere angeformter Vorsprung (Dorn)
- 5d: L-förmiger Vorsprung zur Arretierung des Leitungsendes 7g
- 6: Induktionsplatte
- 7: Leitung; Flachbandleitung
- 7a: Bereich der Leitung, der zwischen dem Drehzahlsensor und der Wickelkopfkappe einliegt
- 7b: Leitungsbereich zwischen den Befestigungsstellen des Drehzahl- und Temperatursensors
- 7c: Leitungsbereich zwischen der Befestigungsstelle des Temperatursensors und dem Kabelende 7g
- 7d: Stichleitung
- 7e: Leitungsbereich der Stichleitung zwischen den Befestigungsstellen des Drehzahl- und Temperatursensors
- 7f: Leitungsbereich zwischen der Befestigungsstelle des Temperatursensors und dem Leitungsende 7g
- 7g: Leitungsende
- 8: Pumpengehäuse
- 9: Drehzahlsensor
- 9a: Spulenkörper
- 9b: Windungen
- 9c: Bohrung im Spulenkörper
- 10: Pumpensteuerung
- 11: Leitungsende mit Stecker
- 12: Steckverbindung für Anschluß an die Pumpensteuerung 10
- 13: Antriebswelle
- 14: Fördermedium
- 15: Temperatursensor
- 15a: Anschlußstellen (Lötverbindungen) der Kontakte des Temperatursensors mit den Leiterbahnen 21
- 16: Spalt zwischen Wickelkopfkappe und Trennwand
- 17: Leiterbahnen der Flachbandleitung 7
- 18,19: Fenster in Form von Bohrungen bzw. Materialaussparungen
- 20: Leiterbahnen für Anschluß des Drehzahlsensors
- 21: Leiterbahnen für Anschluß des Temperatursensors
- 22: Auflagepunkt der Schlaufe S an der Wickelkopfkappe

- A: Ausschnitt
- F: Feder; Druckfeder
- S: Schlaufe bzw. Auge

## Patentansprüche

1. Pumpe (1) mit einem Pumpenlaufrad (3) und einem das Pumpenlaufrad (3) antreibenden Antrieb (2), wobei zwischen dem Pumpenlaufrad (3) und dem Antrieb (2) eine Trennwand (4) ist, und auf der dem Antrieb (2) zugewandten Seite der Trennwand (4) ein Drehzahlsensor (9) im Bereich des Pumpenlaufrades (3) angeordnet ist, und der Drehzahlsensor (9) mittels einer elektrischen Leitung (7) mit einer Steuerung (10) der Pumpe (1) in elektrischer Verbindung ist, **dadurch gekennzeichnet, daß** zusätzlich zum Drehzahlsensor (9) ein Temperatursensor (15) an der Leitung (7) angeschlossen ist, und der Temperatursensor (15) mittels einer Feder (F) gegen die Trennwand (4) oder einer mit dieser in thermisch leitender Verbindung befindlichen Wärmebrücke druckbeaufschlagbar ist.

2. Pumpe (1) nach Anspruch 1, **dadurch gekennzeichnet, daß** der Temperatursensor (15) mittels eines zusätzlichen Leitungsstrangs (7b,7c,7d,7e,7f) mit der Leitung (7) in elektrischer Verbindung ist.

3. Pumpe (1) nach Anspruch 2, **dadurch gekennzeichnet, daß** die Leitung (7) oder der zusätzliche Leitungsstrang (7b, 7c, 7d, 7e, 7f) die Feder (F) bildet, welche insbesondere als Blattfeder ausgebildet ist.

4. Pumpe (1) nach Anspruch 3, **dadurch gekennzeichnet, daß** die Leitung (7) oder der zusätzliche Leitungsstrang (7b,7c,7d,7e,7f) gebogen ist und durch die Verbiegung eine Rückstellkraft erzeugbar ist, mittels der der Temperatursensor (15) gegen die Trennwand (4) oder einer mit dieser in thermisch leitender Verbindung befindlichen Wärmebrücke druckbeaufschlagbar ist.

5. Pumpe (1) nach Anspruch 4, **dadurch gekennzeichnet, daß** die Leitung (7) oder der zusätzliche Leitungsstrang (7b,7c) zu einer Schlaufe oder einem Auge (S) gebogen ist.

6. Pumpe (1) nach einem der vorherigen Ansprüche, **dadurch gekennzeichnet, daß** der Drehzahlsensor (9) eine Spule (9a,9b) ist, die an einer Wickelkopfkappe (5) des Antriebs (2) der Pumpe (1) insbesondere lösbar befestigt ist.

7. Pumpe (1) nach einem der vorherigen Ansprüche, **dadurch gekennzeichnet, daß** die Schlaufe oder das Auge (S) von der Trennwand (4) und der Wickelkopfkappe (5) bei montierter Pumpe (1) zusammengedrückt ist und hierdurch die Andruckkraft für den Temperatursensor (15) an die Trennwand (4) oder Wärmebrücke erzeugbar ist.

8. Pumpe (1) nach einem der vorherigen Ansprüche, **dadurch gekennzeichnet, daß** der Spulenkörper (9a) auf einem Vorsprung (5a) insbesondere Dorn der Wickelkopfkappe (5) aufsteckbar ist, wobei die Leitung (7,7a) zwischen dem Spulenkörper (9a) und der Wickelkopfkappe (5) einliegt.

9. Pumpe (1) nach Anspruch 8, **dadurch gekennzeichnet, daß** die Leitung (7) und/oder der zusätzliche Leitungsstrang (7b,7c,7d,7e,7f) eine Flachbandleitung mit zwei in Längsrichtung des Kabels (7,7b,7c,7d,7e,7f) beabstandeten Fenstern oder Ausnehmungen (18,19) ist, wobei die Schlaufe oder das Auge (S) dadurch gebildet ist, daß beide Fenster oder Ausnehmungen (18,19) den Vorsprung (5a) umgreifen.

10. Pumpe (1) nach einem der vorherigen Ansprüche, **dadurch gekennzeichnet, daß** der Temperatursensor (15) parallel zum Drehzahlsensor (9) geschaltet ist.

11. Pumpe (1) nach einem der vorherigen Ansprüche, **dadurch gekennzeichnet, daß** der Temperatursensor (15) ein Thermoelement, temperaturabhängiger Widerstand, Photoleiter oder eine Photodiode ist.

## Claims

1. Pump (1) with a pump rotor (3) and a drive (2) driving the pump rotor (3), whereby between the pump rotor (3) and the drive (2) is a separating wall (4), and on the side of the separating wall (4) facing towards the drive (2) is arranged a speed sensor (9) in the region of the pump rotor (3), and the speed sensor (9) is in electrical connection by means of an electrical cable (7) with a control system (10) of the pump (1), **characterised in that** in addition to the speed sensor (9), a temperature sensor (15) is connected to the cable (7) and the temperature sensor (15) may be pressed by means of a spring (F) against the separating wall (4) or against a thermal bridge in thermally conducting contact with said wall.

2. Pump (1) according to Claim 1, **characterised in that** the temperature sensor (15) is in electrical connection with the cable (7) by means of an additional cable strand (7b, 7c, 7d, 7e, 7f).

3. Pump (1) according to Claim 2, **characterised in that** the cable (7) or the additional cable strand (7b, 7c, 7d, 7e, 7f) comprises the spring (F), which is particularly designed as a leaf spring.

4. Pump (1) according to Claim 3, **characterised in that** the cable (7) or the additional cable strand (7b, 7c, 7d, 7e, 7f) is bent and, through the bending, a restoring force may be generated, by means of which the temperature sensor (15) may be pressed against the separating wall (4) or against a thermal bridge in thermally conducting contact with said wall.

5. Pump (1) according to Claim 4, **characterised in that** the cable (7) or the additional cable strand (7b, 7c) is bent into a loop or an eye (S).

6. Pump (1) according to one of the previous claims, **characterised in that** the speed sensor (9) is a coil (9a, 9b) attached, particularly detachably, to a coil end cap (5) of the drive (2) of the pump (1).

7. Pump (1) according to one of the previous claims, **characterised in that**, with the pump (1) mounted, the loop or the eye (S) is compressed by the separating wall (4) and the coil end cap (5) and thereby the force for pressing the temperature sensor (15) against the separating wall (4) or thermal bridge may be generated.

8. Pump (1) according to one of the previous claims, **characterised in that** the coil former (9a) may be pushed onto a projection (5a), particularly a pin of the coil end cap (5), whereby the cable (7, 7a) lies between the coil body (9a) and the coil end cap (5).

9. Pump (1) according to Claim 8, **characterised in that** the cable (7) and/or the additional cable strand (7b, 7c, 7d, 7e, 7f) is a ribbon cable with two windows or recesses (18, 19) separated in the longitudinal direction of the cable (7, 7b, 7c, 7d, 7e, 7f), whereby the loop or the eye (S) is formed **in that** both windows or recesses (18, 19) surround the projection (5a).

10. Pump (1) according to one of the previous claims, **characterised in that** the temperature sensor (15) is connected in parallel with the speed sensor (9).

11. Pump (1) according to one of the previous claims, **characterised in that** the temperature sensor (15) is a thermocouple, a temperature-dependent resistor, a photoconductor or a photodiode.

## Revendications

1. Pompe (1) avec une roue mobile de pompe (3) et un entraînement (2) entraînant la roue mobile de pompe (3), une paroi de séparation (4) se trouvant entre la roue mobile de pompe (3) et l'entraînement (2) et un capteur de vitesse de rotation (9) étant disposé dans la zone de la roue mobile de pompe (3) sur la face de la paroi de séparation (4) tournée vers l'entraînement (2) et le capteur de vitesse de rotation (9) étant en liaison électrique, au moyen d'une ligne (7) électrique, avec une commande (10) de la pompe (1),
**caractérisée en ce qu'**un capteur de température (15) est raccordé, en plus du capteur de vitesse de rotation (9), à la ligne (7) et le capteur de température (15) peut être soumis à une pression, au moyen d'un ressort (F), contre la paroi de séparation (4) ou un pont thermique se trouvant en conduction thermique avec celle-ci.

2. Pompe (1) selon la revendication 1,
**caractérisée en ce que** le capteur de température (15) est en liaison électrique avec la ligne (7) au moyen d'une branche de ligne (7b, 7c, 7d, 7e, 7f) supplémentaire.

3. Pompe (1) selon la revendication 2,
**caractérisée en ce que** la ligne (7) ou la branche de ligne (7b, 7c, 7d, 7e, 7f) supplémentaire forme le ressort (F), lequel est en particulier réalisé sous forme de ressort-lame.

4. Pompe (1) selon la revendication 3,
**caractérisée en ce que** la ligne (7) ou la branche de ligne (7b, 7c, 7d, 7e, 7f) supplémentaire est courbée et une force de rappel peut être engendrée par la courbure, par laquelle le capteur de température (15) peut être soumis à une pression contre la paroi de séparation (4) ou un pont thermique se trouvant en conduction thermique avec celle-ci.

5. Pompe (1) selon la revendication 4,
caractérisée en-ce que la ligne (7) ou la branche de ligne (7b, 7c) est courbée en un crochet fermé ou un oeillet (S).

6. Pompe (1) selon l'une des revendications précédentes,
**caractérisée en ce que** le capteur de vitesse de rotation (9) est une bobine (9a, 9b) qui est fixée, en particulier de manière démontable, à un couvre-enroulement (5) de l'entraînement (2) de la pompe (1).

7. Pompe (1) selon l'une des revendications précédentes,
**caractérisée en ce que** le crochet fermé ou l'oeillet (S) est comprimé par la paroi de séparation (4) et le couvre-enroulement (5), avec la pompe (1) montée, et la force de pression pour le capteur de température (15) sur la paroi de séparation (4) ou le pont thermique peut ainsi être engendrée.

8. Pompe (1) selon l'une des revendications précédentes,
**caractérisée en ce que** le corps de bobine (9a) peut être enfilé sur une saillie (5a), en particulier une broche du couvre-enroulement (5), la ligne (7, 7a) étant logée entre le corps de bobine (9a) et le couvre-enroulement (5).

9. Pompe (1) selon la revendication 8,
**caractérisée en ce que** la ligne (7) et/ou la branche de ligne (7b, 7c, 7d, 7e, 7f) supplémentaire sont une ligne en ruban avec deux fenêtres ou évidements (18, 19) écartés en direction longitudinale du câble (7, 7b, 7c, 7d, 7e, 7f), le crochet fermé ou l'oeillet (S) étant formés par le fait que les deux fenêtres ou évidements (18, 19) entourent la saille (5a).

10. Pompe (1) selon l'une des revendications précédentes,
**caractérisée en ce que** le capteur de température (15) est connecté en parallèle au capteur de vitesse de rotation (9).

11. Pompe (1) selon l'une des revendications précédentes,
**caractérisée en ce que** le capteur de température (15) est un thermocouple, une résistance dépendant de la température, un photoconducteur ou une photodiode.
